# EUROPÄISCHE PATENTSCHRIFT

(11) **EP 3 372 916 B1**
(45) Veröffentlichungstag und Bekanntmachung des Hinweises auf die Patenterteilung: **09.11.2022**
(21) Anmeldenummer: 18160675.7
(22) Anmeldetag: 08.03.2018
(51) Int. Cl.: F24F 13/32, F16B 37/08

(54) **SYSTEM ZUR LÖSBAREN BEFESTIGUNG EINES BAUTEILS EINER KLIMA- UND RAUMLUFTTECHNISCHEN ANLAGE**
SYSTEM FOR REVERSIBLY ATTACHING AN ELEMENT OF AIR CONDITIONING AND VENTILATION ASSEMBLY
SYSTÈME DE FIXATION AMOVIBLE D'UN COMPOSANT D'UNE INSTALLATION DE CLIMATISATION ET D'AÉRAULIQUE

(30) Priorität: 10.03.2017 DE 202017101384 U
(43) Veröffentlichungstag der Anmeldung: 12.09.2018
(73) Patentinhaber: TROX GmbH, 47506 Neukirchen-Vluyn (DE)
(72) Erfinder: Zwiernik, Lukas, 47443 Moers (DE); Leitner, Daniel, 47918 Tönisvorst (DE); Helders, Tim, 47638 Straelen (DE); Hufland, Tobias, 47506 Neukirchen-Vluyn (DE)
(74) Vertreter: Dr. Stark & Partner Patentanwälte mbB

(56) Entgegenhaltungen:
- EP-A1- 3 054 177
- EP-A2- 0 106 451
- DE-A1-102006 001 741
- US-A1- 2008 159 824
- US-A1- 2016 176 629

## Beschreibung

Die Erfindung betrifft ein System zur lösbaren Befestigung eines Bauteils einer klima- und raumlufttechnischen Anlage, wobei das System ein Halteelement sowie ein daran lösbar anbringbares Befestigungselement umfasst, wobei weiterhin das Bauteil mittels zumindest eines, durch eine Öffnung in dem zu befestigenden Bauteil führbares Befestigungselement anbringbar ist, wobei das Befestigungselement an einem Ende ein Außengewinde unter Bildung eines wendelförmig ausgebildeten Gewindegangs aufweist und am anderen Ende einen die Öffnung des Bauteils zumindest teilweise überdeckenden Kopfbereich umfasst, und wobei dem Halteelement ein mit dem Außengewinde des Befestigungselements zusammenwirkendes Gegenelement mit einem Innengewinde zugeordnet ist und wobei im montierten Zustand das mit dem Außengewinde versehene Ende des Befestigungselementes mit dem Innengewinde des Gegenelementes zusammenwirkend ausgebildet ist. Die Öffnung muss nicht zwingend von allen Seiten umschlossen sein. Es ist auch möglich, dass die Öffnung im Randbereich des Bauteils liegt und zum Rand hin offen sein kann.

Bei dem Befestigungselement handelt es sich um eine Schraube, die vom Raum nach Anlegen des Bauteils in der gewünschten Position in das Gegenelement eingeschraubt wird. Nachteilig ist, dass das Eindrehen der Schraube bei der Montage, das mittels eines Werkzeuges erfolgt, recht zeitaufwändig ist, insbesondere wenn der Eindrehweg lang ist. Während dieser Zeit muss das

Bauteil mit der anderen Hand gehalten werden.

US 2008/159824, DE102006001741, US2016176629 und EP3054177 zeigen Systeme gemäß dem Oberbegriff des Patentanspruches 1.

Aufgabe der Erfindung ist es, die vorgenannten Nachteile zu vermeiden und ein System anzugeben, das eine einfachere Montage des Bauteils ermöglicht.

Diese Aufgabe wird dadurch gelöst, dass das Gegenelement zumindest zwei im Abstand zueinander angeordnete, das Innengewinde bildende, stegförmig vorspringende Teilbereiche aufweist, wobei jeder Teilbereich einen, vorzugsweise endseitigen, Kontaktbereich aufweist, der im montierten Zustand mit dem Befestigungselement zusammenwirkt, und wobei zumindest der Kontaktbereich wenigstens eines Teilbereichs gegen eine Federkraft nach außen unter Vergrößerung des Abstandes zu dem (den) weiteren Teilbereiche(n) verlagerbar ist, so dass das Befestigungselement in Einführrichtung gesehen ohne ein Werkzeug in das Innengewinde drückbar und entgegen die Einführrichtung mittels eines Werkzeuges herausdrehbar ist und dass das Gegenelement auf seiner den Teilbereichen gegenüberliegenden Seite einen in Einführrichtung gesehen trichterförmig zusammenlaufenden Einführbereich aufweist.

Das Außengewinde stellt eine profilierte Einkerbung dar und verläuft fortlaufend nach Art einer Wendel um die Wandung des Befestigungselementes herum. Das Außengewinde weist insoweit eine Steigung auf. Bei dem Außengewinde kann es sich beispielsweise um ein Trapezgewinde oder ein Whitworth-Gewinde oder dergleichen handeln. Auch kann das Außengewinde als Linksgewinde ausgebildet sein. Bei dem Halteelement kann es sich beispielsweise um eine Schiene handeln, die Bestandteil einer Komponente der klimatechnischen Anlage ist oder bereits bauseitig in dem Raum, in dem die raumlufttechnische Anlage montiert ist, vorhanden ist. Das Bauteil kann beispielsweise eine frontseitige Platte eines Durchlasses darstellen.

Die federnde Ausgestaltung erlaubt ein einfaches Eindrücken des Befestigungselements in Einführrichtung gesehen in das Innengewinde des Gegenelementes. Hierfür ist kein Werkzeug erforderlich. Dies erleichtert und beschleunigt die Montage. Im montierten Zustand wirkt das mit dem Außengewinde versehene Ende des Befestigungselementes mit dem Innengewinde des Gegenelementes zusammen. Mittels eines Werkzeuges, beispielsweise eines Schraubendrehers, kann das Befestigungsmittel auf eine herkömmliche Weise wieder entgegen die Einführrichtung herausgedreht werden.

Zumindest ein Teilbereich kann wenigstens bereichsweise, vorzugsweise vollständig, aus Federstahl oder aus einem federnden Kunststoff bestehen. Selbstverständlich sind auch andere geeignete Materialien denkbar.

Zumindest ein Gegenelement kann Teil des Halteelementes sein. Bei einer solchen Ausgestaltung sind die Teilbereiche direkt auf das Halteelement beispielsweise aufgeklebt oder aufgeschweißt.

Alternativ kann zumindest ein Gegenelement als separates Bauteil ausgebildet sein, und die Teilbereiche können an einer Grundplatte angeformt sein.

Die Grundplatte kann eine Öffnung aufweisen, und die Teilbereiche können um die Öffnung herum an der Grundplatte angeformt sein. Die Öffnung ermöglicht, dass das Befestigungselement durch das Gegenelement hindurchragen kann.

Der Rand der Öffnung kann zumindest bereichsweise, vorzugsweise vollständig, einen in Richtung der Kontaktbereiche weisenden Kragen aufweisen. Dieser Kragen dient zur Führung des Befestigungselementes beim Einführen in das Innengewinde.

Wenigstens ein Teilbereich kann vor dem Kontaktbereich in Einführrichtung gesehen abgeschrägt ausgebildet sein. Dies erleichtert das Einführen des Befestigungselementes in das Innengewinde.

Zumindest ein Teilbereich kann derart abgewinkelt ausgebildet sein, dass sich in Einführrichtung gesehen der Abstand zu der Mittellinie M zunächst vergrößert und dann zum Kontaktbereich hin verringert.

Das Halteelement kann eine Ausnehmung aufweisen, die derart ausgestaltet ist, dass die Grundplatte nach dem Durchführen der Teilbereiche durch die Ausnehmung zumindest bereichsweise auf dem Randbereich der Ausnehmung aufliegt. Sofern die Teilbereiche die vorbeschriebene abgewinkelte Ausgestaltung aufweisen, kann durch die Veränderung der Breite der Ausnehmung in dem Bereich, an dem die Teilbereiche anliegen, die Klemmkraft der Teilbereiche beeinflusst werden. Sofern ein Bauteil mit einem höheren Gewicht befestigt werden soll, wird eine etwas geringere Breite der Ausnehmung gewählt. Damit liegen die Teilbereiche, die beispielsweise aus einem Federstahl bestehen, enger oder bereits vorgespannt an dem Rand der Ausnehmung an. Infolgedessen muss eine höhere Kraft beim Eindrücken des Befestigungsmittels aufgebracht werden, da nur eine geringere Länge jedes Teilbereiches für eine nach außen Verlagerung zur Verfügung steht oder infolge der Vorspannung eine höhere Kraft aufgebracht werden muss. Infolgedessen wird im montierten Zustand eine höhere Klemmkraft von den Teilbereichen auf das Befestigungselement ausgeübt. Damit kann ein und dasselbe Gegenelement zur Befestigung von Bauteilen unterschiedlichen Gewichts verwendet werden.

Alternativ kann das Halteelement eine Ausnehmung sowie zwei auf gegenüberliegenden Seiten der Ausnehmung angeordnete Schlitze aufweisen, in die die Grundplatte mit ihrem Randbereich einführbar ist.

Es ist auch möglich, dass das Halteelement zwei im Abstand zueinander angeordnete Schlitze aufweist, in die die Grundplatte mit ihrem Randbereich einführbar ist.

Die Kontaktbereiche der Teilbereiche können in Einführrichtung gesehen entsprechend der Steigung derart versetzt zueinander angeordnet sein, so dass jeder Kontaktbereich in den Gewindegang eingreift. Durch das Eingreifen jedes Kontaktbereichs ist eine besonders sichere Befestigung gewährleistet.

Es bietet sich an, wenn zwei gegenüberliegende Teilbereiche vorgesehen sind, wobei die Kontaktbereiche der beiden Teilbereiche in Einführrichtung gesehen um die halbe Steigung versetzt zueinander angeordnet sind. In diesem Fall sind die Kontaktbereiche gegenüberliegend angeordnet. Beide Kontaktbereiche greifen gleichzeitig in den Gewindegang ein.

Das Befestigungselement kann als Außengewinde ein metrisches Gewinde oder ein metrisches Feingewinde aufweisen.

Das Befestigungselement kann als Schraube ausgebildet sein.

Das Gegenelement weist auf seiner den Teilbereichen gegenüberliegenden Seite einen in Einführrichtung gesehen trichterförmig zusammenlaufenden Einführbereich auf. Beim Einführen des Befestigungselementes bei der Montage wird das eingeführte Ende des Befestigungselementes durch den zusammenlaufenden Einführbereich geführt.

Der zusammenlaufende Einführbereich kann als separates Bauteil ausgebildet sein und mittels einer Fixiereinrichtung an dem Gegenelement bzw. an dem Halteelement befestigbar sein.

Dabei kann der zusammenlaufende Einführbereich in seinem mit dem Halteelement in Kontakt befindlichen Bereich zwei im Abstand zueinander angeordnete und aufeinander zuweisende, insbesondere schlitzartige ausgebildete, Haltearme aufweisen, die den die Ausnehmung bildenden Bereich des Halteelementes randseitig umgreifen.

Der zusammenlaufende Einführbereich kann, vorzugsweise an seiner Außenseite, zumindest eine Halteeinrichtung für ein Zusatzelement, wie beispielsweise einen Messnippel, aufweisen.

Im Folgenden werden in den Zeichnungen dargestellte Ausführungsbeispiele der Erfindung erläutert. Es zeigen:
- Fig. 1: das erfindungsgemäße System ohne ein Bauteil,
- Fig. 2: einen Schnitt durch ein Gegenelement und einem als separates Bauteil ausgebildeten zusammenlaufenden Einführbereich mit einem darin eingeführten Befestigungselement,
- Fig. 3: eine schräge Draufsicht auf ein Halteelement,
- Fig. 4: eine schräge Draufsicht auf ein als separates Bauteil ausgebildeter zusammenlaufender Einführbereich,
- Fig. 5: eine schräge Draufsicht auf ein Gegenelement,
- Fig. 6: einen Schnitt durch den Gegenstand nach Fig. 5,
- Fig. 7: ein Schnitt durch ein Halteelement mit einer Ausnehmung und einem darin eingesetzten Gegenelement,
- Fig. 8: das Detail "X" aus Fig. 7 und
- Fig. 9: eine Seitenansicht auf ein anderes Ausführungsbeispiel.

In allen Figuren werden für gleiche bzw. gleichartige Bauteile übereinstimmende Bezugszeichen verwendet.

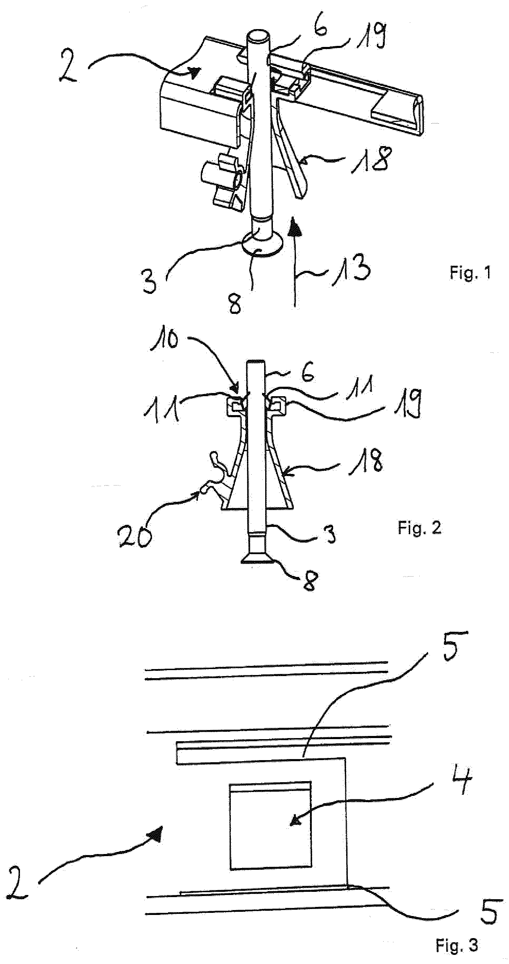

Die Figuren zeigen ein System zur lösbaren Befestigung eines Bauteils 1 einer klima- und raumlufttechnischen Anlage. Das System umfasst neben dem Bauteil 1 ein Halteelement 2 und ein daran lösbar anbringbares Befestigungselement 3. Bei dem Halteelement 2 handelt es sich in dem in den Fig. 1 und 3 dargestellten erfindungsgemäßen System um eine Schiene beispielsweise einer Deckenkonstruktion. In dem Halteelement 2 ist eine Ausnehmung 4 vorgesehen, die in einem zungenähnlich ausgebildeten Teilbereich, der beidseitig von zwei Schlitzen 5 umfasst ist, angeordnet ist.

Das Befestigungselement 3 ist als Schraube ausgebildet. An dem einen der beiden Enden des Befestigungselements 3 ist ein nicht näher dargestelltes Außengewinde 6 unter Bildung eines wendelförmig ausgebildeten Gewindegangs und am anderen Ende ein eine Öffnung 7 des zu befestigenden Bauteils 1 überdeckender Kopfbereich 8 vorgesehen. Das Außengewinde 8 ist als metrisches Gewinde ausgebildet.

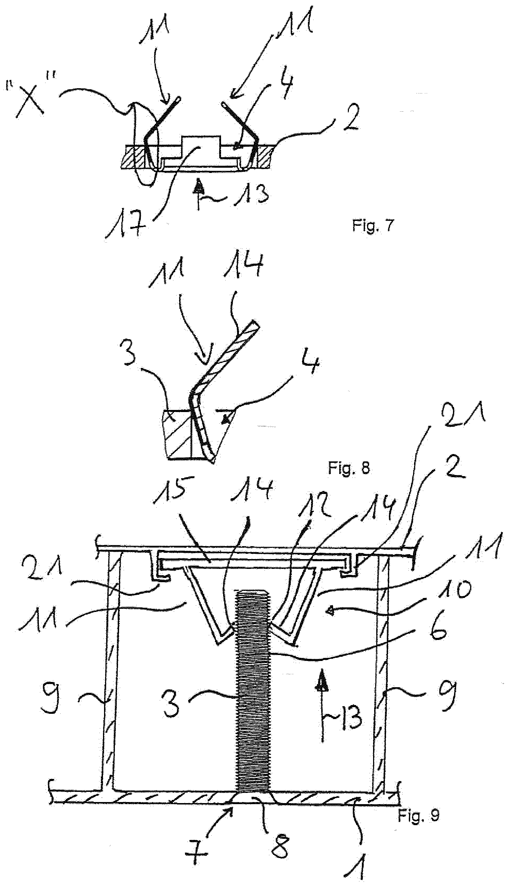

Bei dem Bauteil 1 kann es sich beispielsweise um eine Platte handeln, die von unten an einem Haltelement 2 befestigt ist. Bei dem in Fig. 9 dargestellten Ausführungsbeispiel sind auf der dem Halteelement 2 zugewandten Seite des Bauteils 1 noch Abstandsstege 9 vorgesehen. Im befestigten Zustand liegen die Abstandsstege 9 mit ihrem jeweiligen oberen Ende an dem Halteelement 2 an. Selbstverständlich ist auch eine Ausgestaltung ohne entsprechende Abstandsstege 9 denkbar, da sich das Bauteil 1 bei einer Montage unterhalb einer Decke schon wegen der Schwerkraft nicht anheben kann. In dem Bauteil 1 ist die Öffnung 7 vorgesehen, durch die das Befestigungselement 3 zum Befestigen des Bauteils 1 geführt ist.

Dem Halteelement 2 ist ein mit dem Außengewinde 6 des Befestigungselements 3 zusammenwirkendes Gegenelement 10 mit einem Innengewinde zugeordnet. Das Gegenelement 10 ist in den dargestellten Ausführungsbeispielen als separates Bauteil ausgebildet. Das Gegenelement 10 weist zwei im Abstand zueinander angeordnete, das Innengewinde bildende, stegförmig vorspringende Teilbereiche 11 auf, die an einer Grundplatte 15 angeformt sind. Jeder Teilbereich 11 weist einen endseitigen Kontaktbereich 12 auf, der im montierten Zustand mit dem Außengewinde 6 des Befestigungselements 3 zusammenwirkt.

Die Teilbereiche 11 bestehen aus einem Federstahl, so dass damit jeder Teilbereich 11 und damit auch der betreffende Kontaktbereich 12 gegen eine Federkraft nach außen verlagerbar ist. Beim nach außen Schwenken vergrößert sich der Abstand zwischen dem Kontaktbereich 12 und der Mittelinie M.

Durch diese federnde Ausgestaltung kann das Befestigungselement 3 einfach in Einführrichtung 13 gesehen ohne ein Werkzeug in das Innengewinde des Gegenelementes 10 gedrückt werden. Dies erleichtert die Montage. Im montierten Zustand wirkt das mit dem Außengewinde 6 versehene Ende des Befestigungselementes 3 mit dem Innengewinde des Gegenelementes 10 zusammen. Mittels eines Werkzeuges, beispielsweise eines Schraubendrehers, kann das Befestigungsmittel 3 auf eine herkömmliche Weise wieder entgegen die Einführrichtung 13 herausgedreht werden.

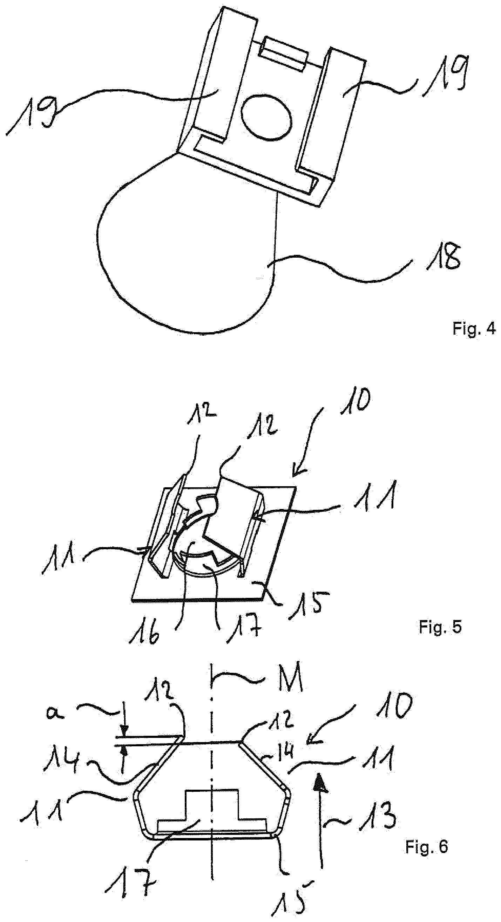

Wie Fig. 6 zu entnehmen ist, sind die Kontaktbereiche 12 der beiden Teilbereiche 11 in Einführrichtung 13 gesehen um die halbe Steigung a versetzt zueinander angeordnet. Damit greifen die beiden gegenüberliegend angeordneten Kontaktbereiche 12 beide in den Gewindegang des Außengewindes 6 ein.

Wie die Fig. 5 bis 9 zeigen, ist jeder Teilbereich 11 vor dem Kontaktbereich 12 d. h. in dem Bereich 14, in Einführrichtung 13 gesehen abgeschrägt ausgebildet. Unter dem Kontaktbereich 12 wird der Teil jedes der beiden Teilbereiche 11 bezeichnet, der unmittelbar mit dem Befestigungsmittel 3 in Kontakt ist, d. h. beispielsweise in einen Gewindegang des Außengewindes 6 eingreift.

Bei den Ausgestaltungen nach den Fig. 1, 2 sowie 5 bis 8 ist jeder Teilbereich 11 derart abgewinkelt ausgebildet, dass sich in Einführrichtung 13 gesehen der Abstand zu der Mittellinie M zunächst vergrößert und dann zum Kontaktbereich 12 hin wieder verringert.

Bei dem Ausführungsbeispiel nach den Fig. 7 und 8 sind die Teilbereiche 11 des Gegenelementes 10 von unten durch die Ausnehmung 4 des Halteelementes 2 geführt. Die Ausnehmung 4 ist derart ausgestaltet, dass die Grundplatte 15 nach dem Durchführen der Teilbereiche 11 von unten durch die Ausnehmung 4 in dem Haltelement 2 zumindest bereichsweise von unten an dem Randbereich der Ausnehmung 4 aufliegt. Nach dem späteren Einführen des Befestigungselementes 3 verhindern die hierdurch aufgespreizten Teilbereiche 11 ein ungewolltes Herausrutschen des Gegenelements 10 nach unten aus der Ausnehmung 4.

Durch die Variation der Breite der Ausnehmung 4 in dem Bereich, an dem die Teilbereiche 11 anliegen, kann die Klemmkraft der Teilbereiche 11 beeinflusst werden. Sofern ein Bauteil 1 mit einem höheren Gewicht befestigt werden soll, wird eine etwas geringere Breite der Ausnehmung 4 gewählt. Damit liegen die Teilbereiche 11 enger oder bereits vorgespannt an dem Rand der Ausnehmung 4 an. Infolgedessen muss eine höhere Kraft beim Eindrücken des Befestigungsmittels 3 aufgebracht werden, da nur eine geringere Länge jedes Teilbereiches 11 für eine nach außen Verlagerung zur Verfügung steht oder infolge der Vorspannung eine höhere Kraft aufgebracht werden muss. Infolgedessen wird im montierten Zustand eine höhere Klemmkraft von den Teilbereichen 11 auf das Befestigungselement 3 ausgeübt. Damit kann durch Auswahl der passenden Größe der Ausnehmung 4 ein und dasselbe Gegenelement 10 zur Befestigung von Bauteilen 1 unterschiedlichen Gewichts verwendet werden.

Bei dem erfindungsgemäßen System nach den Fig. 1, 2 sowie 5 bis 8 weist die Grundplatte 15 eine Öffnung 16 auf, wobei die Teilbereiche 11 um die Öffnung 16 herum an der Grundplatte 15 angeformt sind. Wie beispielsweise in den Fig. 5 und 6 dargestellt, weist der Rand der Öffnung 16 in zwei gegenüberliegenden Bereichen jeweils einen in Richtung der Kontaktbereiche 12 weisenden Kragen 17 auf. Die Kragen 17 erleichtern das Einführen des Befestigungsmittels 3 von unten in das Innengewinde des Gegenelementes 10.

Das erfindungsgemäße System nach den Fig. 1 und 2 weist ferner einen in Einführrichtung 13 gesehen trichterförmig zusammenlaufenden Einführbereich 18 auf, der als separates Bauteil ausgebildet ist. Das separate Bauteil ist mittels einer Fixiereinrichtung an dem Halteelement 2 befestigbar. Hierzu weist der zusammenlaufende Einführbereich 18 in seinem mit dem Halteelement 2 in Kontakt befindlichen Bereich zwei im Abstand zueinander angeordnete und aufeinander zuweisende schlitzartige ausgebildete Haltearme 19 auf, die den die Ausnehmung 4 bildenden Bereich des Halteelementes 2 randseitig umgreifen. Bei der Montage werden zunächst die beiden Teilbereiche 11 des Gegenelementes 10 von unten in die Ausnehmung 4 des nach unten geöffneten als Schiene ausgebildeten Haltelementes 2 geführt. Hierzu wird beispielsweise auf Fig. 1 verwiesen. Anschließend wird der zusammenlaufende Einführbereich 18, der als separates Bauteil ausgebildet ist, von unten derart in das als nach unten geöffnete Schiene ausgebildete Haltelement 2 bewegt, dass die schlitzartig ausgebildeten Haltearme 19 durch eine seitliche Verschiebung auf den zungenähnlich ausgebildeten Teilbereich mit der Ausnehmung 4 geschoben werden können. Der trichterförmig zusammenlaufende Einführbereich 18 erlaubt ein verdecktes einfaches Einführen des Befestigungselementes 3 in das Gegenelement 10, da das Befestigungselement 3 durch den zusammenlaufenden Einführbereich 18 geführt wird.

Der zusammenlaufende Einführbereich 18 weist an seiner Außenseite eine Halteeinrichtung 20 für ein Zusatzelement, wie beispielsweise einen Messnippel, auf. Die Halteeinrichtung 20 besteht aus zwei Klemmarmen, zwischen denen beispielsweise ein Schlauch einklemmbar ist.

In Fig. 9 ist eine alternative Ausgestaltung eines Gegenelementes 10 dargestellt. Hier weist das Haltelement 2 auf seiner Unterseite zwei im Abstand zueinander angeordnete Schlitze 21 auf, in die die Grundplatte 15 mit ihrem Randbereich eingeführt ist. In der Grundplatte 15 ist keine Öffnung 16 vorgesehen. Auch das Halteelement 2 weist keine Ausnehmung 4 auf. Das Befestigungselement 3 wird in der gleichen Weise in das Gegenelement 10 zur Montage eingedrückt und kann wieder herausgedreht werden.

## Patentansprüche

1. System zur lösbaren Befestigung eines Bauteils (1) einer klima- und raumlufttechnischen Anlage, wobei das System ein Halteelement (2) sowie ein daran lösbar anbringbares Befestigungselement (3) umfasst, wobei weiterhin das Bauteil (1) mittels zumindest eines, durch eine Öffnung (7) in dem zu befestigenden Bauteil (1) führbares Befestigungselement (3) anbringbar ist, wobei das Befestigungselement (3) an einem Ende ein Außengewinde (6) unter Bildung eines wendelförmig ausgebildeten Gewindegangs aufweist und am anderen Ende einen die Öffnung (7) des Bauteils (1) zumindest teilweise überdeckenden Kopfbereich (8) umfasst, und wobei dem Halteelement (2) ein mit dem Außengewinde (6) des Befestigungselements (3) zusammenwirkendes Gegenelement (10) mit einem Innengewinde zugeordnet ist und wobei im montierten Zustand das mit dem Außengewinde (6) versehene Ende des Befestigungselementes (3) mit dem Innengewinde des Gegenelementes (10) zusammenwirkend ausgebildet ist, das Gegenelement (10) zumindest zwei im Abstand zueinander angeordnete, das Innengewinde bildende, stegförmig vorspringende Teilbereiche (11) aufweist, wobei jeder Teilbereich (11) einen, vorzugsweise endseitigen, Kontaktbereich (12) aufweist, der im montierten Zustand mit dem Befestigungselement (3) zusammenwirkt, und wobei zumindest der Kontaktbereich (12) wenigstens eines Teilbereichs (11) gegen eine Federkraft nach außen verlagerbar ist, so dass das Befestigungselement (3) in Einführrichtung (13) gesehen ohne ein Werkzeug in das Innengewinde drückbar und entgegen die Einführrichtung (13) mittels eines Werkzeuges herausdrehbar ist, **dadurch gekennzeichnet, dass** das Gegenelement (10) auf seiner den Teilbereichen (11) gegenüberliegenden Seite einen in Einführrichtung (13) gesehen trichterförmig zusammenlaufenden Einführbereich (18) aufweist.

2. System nach dem vorhergehenden Anspruch, **dadurch gekennzeichnet, dass** zumindest ein Teilbereich (11) wenigstens bereichsweise, vorzugsweise vollständig, aus Federstahl oder aus einem federnden Kunststoff besteht.

3. System nach einem der vorhergehenden Ansprüche, **dadurch gekennzeichnet, dass** zumindest ein Gegenelement (10) Teil des Halteelementes (2) ist.

4. System nach einem der vorhergehenden Ansprüche, **dadurch gekennzeichnet, dass** zumindest ein Gegenelement (10) als separates Bauteil ausgebildet ist und dass die Teilbereiche (11) an einer Grundplatte (15) angeformt sind.

5. System nach dem vorhergehenden Anspruch, **dadurch gekennzeichnet, dass** die Grundplatte (15) eine Öffnung (16) aufweist und die Teilbereiche (11) um die Öffnung (16) herum an der Grundplatte (15) angeformt sind.

6. System nach dem vorhergehenden Anspruch, **dadurch gekennzeichnet, dass** der Rand der Öffnung (16) zumindest bereichsweise, vorzugsweise vollständig, einen in Richtung der Kontaktbereiche (12) weisenden Kragen (17) aufweist.

7. System nach einem der vorhergehenden Ansprüche, **dadurch gekennzeichnet, dass** wenigstens ein Teilbereich (11) vor dem Kontaktbereich (12) in Einführrichtung (13) gesehen abgeschrägt ausgebildet ist.

8. System nach einem der vorhergehenden Ansprüche, **dadurch gekennzeichnet, dass** zumindest ein Teilbereich (11) derart abgewinkelt ausgebildet ist, dass sich in Einführrichtung (13) gesehen der Abstand zu der Mittellinie M zunächst vergrößert und dann zum Kontaktbereich (12) hin verringert.

9. System nach einem der Ansprüche 4 bis 8, **dadurch gekennzeichnet, dass** das Halteelement (2) eine Ausnehmung (4) aufweist, die derart ausgestaltet ist, dass die Grundplatte (15) nach dem Durchführen der Teilbereiche (11) durch die Ausnehmung (4) zumindest bereichsweise auf dem Randbereich der Ausnehmung (4) anliegt.

10. System nach einem der Ansprüche 4 bis 8, **dadurch gekennzeichnet, dass** das Halteelement (2) eine Ausnehmung (4) sowie zwei auf gegenüberliegenden Seiten der Ausnehmung (4) angeordnete Schlitze (21) aufweist, in die die Grundplatte (15) mit ihrem Randbereich einführbar ist.

11. System nach einem der Ansprüche 4 bis 8, **dadurch gekennzeichnet, dass** das Halteelement (2) zwei im Abstand zueinander angeordnete Schlitze (21) aufweist, in die die Grundplatte (15) mit ihrem Randbereich einführbar ist.

12. System nach einem der vorhergehenden Ansprüche, **dadurch gekennzeichnet, dass** die Kontaktbereiche (12) der Teilbereiche (11) in Einführrichtung (13) gesehen entsprechend der Steigung derart versetzt zueinander angeordnet sind, so dass jeder Kontaktbereich (12) in den Gewindegang eingreift.

13. System nach einem der vorhergehenden Ansprüche, **dadurch gekennzeichnet, dass** zwei gegenüberliegende Teilbereiche (11) vorgesehen sind, wobei die Kontaktbereiche (12) der beiden Teilbereiche (11) in Einführrichtung (13) gesehen um die halbe Steigung versetzt zueinander angeordnet sind.

14. System nach einem der vorhergehenden Ansprüche, **dadurch gekennzeichnet, dass** das Befestigungselement (3) als Außengewinde (6) ein metrisches Gewinde oder ein metrisches Feingewinde aufweist.

15. System nach einem der vorhergehenden Ansprüche, **dadurch gekennzeichnet, dass** das Befestigungselement (3) als Schraube ausgebildet ist.

16. System nach einem der vorhergehenden Ansprüche, **dadurch gekennzeichnet, dass** der zusammenlaufende Einführbereich (18) als separates Bauteil ausgebildet ist und mittels einer Fixiereinrichtung an dem Gegenelement (10) bzw. an dem Halteelement (2) befestigbar ist.

17. System nach einem der vorhergehenden Ansprüche, soweit diese auf Anspruch 9 rückbezogen sind, **dadurch gekennzeichnet, dass** der zusammenlaufende Einführbereich (18) in seinem mit dem Halteelement (2) in Kontakt befindlichen Bereich zwei im Abstand zueinander angeordnete und aufeinander zuweisende, insbesondere schlitzartige ausgebildete, Haltearme (19) aufweist, die den die Ausnehmung (4) bildenden Bereich des Halteelementes (2) randseitig umgreifen.

18. System nach einem der vorhergehenden Ansprüche, **dadurch gekennzeichnet, dass** der zusammenlaufende Einführbereich (18), vorzugsweise an seiner Außenseite, zumindest eine Halteeinrichtung (20) für ein Zusatzelement, wie beispielsweise einen Messnippel, aufweist.

## Claims

1. System for reversibly attaching an element (1) of an air-conditioning and ventilation assembly, wherein the system comprises a retaining element (2), and a securing element (3) which can be reversibly attached to it, wherein the element (1) can be further attached by means of at least one securing element (3) which can be guided through an opening (7) in the element (1) which is to be secured, wherein the securing element (3) comprises at one end an outer thread (6), with the formation of a thread configured as a spiral, and, at the other end, comprises a head region (8) which at least partially covers the opening (7) of the element (1), and wherein a counter element (10) with an inner thread is assigned to the retaining element (2), which interacts with the outer thread (6) of the securing element (3), and wherein, in the installed state, the end of the securing element (3) provided with the outer thread (6) is configured such as to interact with the inner thread of the counter element (10), the counter element (10) comprises at least two part regions (11), arranged at a distance interval from one another and projecting in the form of a web, forming the inner thread, wherein each part region (11) comprises s contact region (12), preferably on the end side, which in the installed state interacts with the securing element (3), and wherein at least the contact region (12) of at least one part region (11) can be displaced outwards against a spring force, such that the securing element (3), seen in the introduction direction (13), can be pressed into the inner thread without a tool, and can be rotated outwards, against the introduction direction (13) by means of a tool, **characterised in that** the counter element (10) comprises, on its side opposite the part regions (11) and seen in the introduction direction (13), an introduction region (18) which converges in the form of a funnel. 33

2. System according to the preceding claim, **characterised in that** at least one part region (11) consists at least in some areas, and preferably entirely, of spring steel or of a spring plastic.

3. System according to any one of the preceding claims, **characterised in that** at least one counter element (10) is a part of the retaining element (2).

4. System according to any one of the preceding claims, **characterised in that** at least one counter element (10) is formed as a separate element, and that the part regions (11) are formed on a base plate (15).

5. System according to any one of the preceding claims, **characterised in that** the base plate (15) has an opening (16), and the part regions (11) around the opening (16) are formed on the base plate (15).

6. System according to any one of the preceding claims, **characterised in that** the edge of the opening (16) comprises, at least in some regions and preferably completely, a collar (17) pointing in the direction of the contact regions (12).

7. System according to any one of the preceding claims, **characterised in that** at least one part region (11) before the contact region (12) is configured as slanted, seen in the introduction direction (13).

8. System according to any one of the preceding claims, **characterised in that** at least one part region (11) is configured as angled in such a way that, seen in the introduction direction (13), the distance interval to the mid-line M is initially enlarged, and then reduces in size towards the contact region (12).

9. System according to any one of claims 4 to 8, **characterised in that** the retaining element (2) exhibits a cut-out opening (4), which is configured in such a way that the base plate (15), after the part regions (11) have been guided through the cut-out opening (4), comes to lie in contact at least in some parts, on the edge region of the cut-out opening (4).

10. System according to any one of claims 4 to 8, **characterised in that** the retaining element (2) exhibits a cut-out opening (4), as well as two slots (21), arranged on opposing sides of the cut-out opening (4), into which the base plate (15) can be introduced with its edge region.

11. System according to any one of claims 4 to 8, **characterised in that** the retaining element (2) comprises two slots (21), arranged at a distance interval from each other, into which the base plate (15) can be introduced with its edge region,

12. System according to any one of the preceding claims, **characterised in that** the contact regions (12) of the part regions (11), seen in the introduction direction (13), are arranged offset to one another, in accordance with the thread pitch, in such a way that each contact region (12) engages into the thread path.

13. System according to any one of the preceding claims, **characterised in that** two opposing part regions (11) are provided, wherein the contact regions (12) of the two part regions (11), seen in the introduction direction (13), are arranged offset to one another by half of the thread pitch.

14. System according to any one of the preceding claims, **characterised in that** the securing element (3), as an outer thread (6), comprises a metric thread or a metric fine thread.

15. System according to any one of the preceding claims, **characterised in that** the securing element (3) is configured as a screw.

16. System according to any one of the preceding claims, **characterised in that** the converging introduction region (18) is formed as a separate element, and can be secured by means of a fixing device to the counter element (10) or to the retaining element (2) respectively.

17. System according to any one of the preceding claims, inasmuch as these relate back to claim 9, **characterised in that** the converging introduction region (18), in its region which is in contact with the retaining element (2), comprises two holding arms (19), arranged at a distance interval from each another and facing towards each other, in particular configured in the form of slots, which engage around the region of the retaining element (2) forming the cut-out opening (4).

18. System according to any one of the preceding claims, **characterised in that** the converging introduction region (18) comprises, preferably on its outer side, at least one retaining device (20) for an additional element, such as, for example, a measurement nipple.

## Revendications

1. Système de fixation libérable d'une pièce structurelle (1) d'une installation de climatisation et de ventilation, ledit système comprenant un élément de retenue (2), ainsi qu'un élément de fixation (3) pouvant être implanté amoviblement sur ce dernier, sachant, par ailleurs, que ladite pièce structurelle (1) peut être mise en place à l'aide d'au moins un élément de fixation (3) pouvant être guidé à travers un orifice (7) pratiqué dans ladite pièce structurelle (1) à fixer, lequel élément de fixation (3) est muni d'un filetage extérieur (6) à une extrémité, avec formation d'un filet de réalisation hélicoïdale et, à l'autre extrémité, d'une région (8) formant tête et recouvrant au moins partiellement l'orifice (7) de ladite pièce structurelle (1), sachant qu'un élément complémentaire (10), pourvu d'un filetage intérieur et coopérant avec ledit filetage extérieur (6) de l'élément de fixation (3), est associé audit élément de retenue (2), et sachant que l'extrémité dudit élément de fixation (3), dotée dudit filetage extérieur (6), est conçue pour coopérer avec ledit filetage intérieur de l'élément complémentaire (10), à l'état monté, lequel élément complémentaire (10) comporte au moins deux régions partielles (11) distantes l'une de l'autre, faisant saillie en forme de membrures et constituant ledit filetage intérieur, chaque région partielle (11) étant nantie d'une zone de contact (12) préférentiellement située à l'extrémité et coopérant avec l'élément de fixation (3), à l'état monté, et sachant qu'au moins la zone de contact (12) d'au moins une région partielle (11) peut être déplacée vers l'extérieur, en opposition à une force élastique, de façon telle qu'en observant dans la direction d'insertion (13), ledit élément de fixation (3) puisse être enfoncé sans outil dans le filetage intérieur et dévissé, au moyen d'un outil, en sens inverse de ladite direction d'insertion (13), **caractérisé par le fait que** l'élément complémentaire (10) présente, sur son côté pointant à l'opposé des régions partielles (11), une zone d'introduction (18) à convergence infundibuliforme en observant dans la direction d'insertion (13).

2. Système selon la revendication précédente, **caractérisé par le fait qu'**au moins une région partielle (11) consiste au moins par zones, de préférence intégralement, en de l'acier à ressorts ou en une matière plastique douée d'élasticité.

3. Système selon l'une des revendications précédentes, **caractérisé par le fait qu'**au moins un élément complémentaire (10) fait partie de l'élément de retenue (2).

4. Système selon l'une des revendications précédentes, **caractérisé par le fait qu'**au moins un élément complémentaire (10) est réalisé en tant que pièce structurelle distincte ; et **par le fait que** les régions partielles (11) sont ménagées solidairement sur une platine d'embase (15).

5. Système selon la revendication précédente, **caractérisé par le fait que** la platine d'embase (15) comporte une ouverture (16) et les régions partielles (11) sont ménagées solidairement, sur ladite platine d'embase (15), tout autour de ladite ouverture (16).

6. Système selon la revendication précédente, **caractérisé par le fait que** le bord de l'ouverture (16) est muni au moins par zones, de préférence intégralement, d'une collerette (17) orientée en direction des zones de contact (12).

7. Système selon l'une des revendications précédentes, **caractérisé par le fait qu'**au moins une région partielle (11) est de réalisation biseautée avant la zone de contact (12) en observant dans la direction d'insertion (13).

8. Système selon l'une des revendications précédentes, **caractérisé par le fait qu'**au moins une région partielle (11) est de réalisation coudée, de façon telle qu'en observant dans la direction d'insertion (13), la distance par rapport à la ligne médiane M croisse, dans un premier temps, et s'amenuise ensuite en direction de la zone de contact (12).

9. Système selon l'une des revendications 4 à 8, **caractérisé par le fait que** l'élément de retenue (2) est pourvu d'un évidement (4) conçu de telle sorte qu'à l'issue du passage des régions partielles (11) à travers ledit évidement (4), la platine d'embase (15) soit en applique, au moins par zones, sur la région marginale dudit évidement (4).

10. Système selon l'une des revendications 4 à 8, **caractérisé par le fait que** l'élément de retenue (2) est muni d'un évidement (4), ainsi que de deux fentes (21) situées sur des côtés opposés dudit évidement (4), dans lesquelles la platine d'embase (15) peut être introduite par sa région marginale.

11. Système selon l'une des revendications 4 à 8, **caractérisé par le fait que** l'élément de retenue (2) est doté de deux fentes (21) situées à distance l'une de l'autre, dans lesquelles la platine d'embase (15) peut être introduite par sa région marginale.

12. Système selon l'une des revendications précédentes, **caractérisé par le fait qu'**en observant dans la direction d'insertion (13), les zones de contact (12) des régions partielles (11) occupent des emplacements mutuellement décalés en concordance avec le pas, de façon telle que chaque zone de contact (12) pénètre dans le filet.

13. Système selon l'une des revendications précédentes, **caractérisé par le fait que** deux régions partielles opposées (11) sont prévues, sachant que les zones de contact (12) desdites deux régions partielles (11) occupent, en observant dans la direction d'insertion (13), des emplacements mutuellement décalés de la moitié du pas.

14. Système selon l'une des revendications précédentes, **caractérisé par le fait que** l'élément de fixation (3) présente un filetage métrique ou un filetage métrique fin en tant que filetage extérieur (6).

15. Système selon l'une des revendications précédentes, **caractérisé par le fait que** l'élément de fixation (3) est réalisé sous la forme d'une vis.

16. Système selon l'une des revendications précédentes, **caractérisé par le fait que** la zone d'introduction (18) convergente est réalisée en tant que pièce structurelle distincte et peut être respectivement fixée à l'élément complémentaire (10), ou à l'élément de retenue (2), au moyen d'un dispositif de blocage à demeure.

17. Système selon l'une des revendications précédentes dans la mesure où ces dernières renvoient à la revendication 9, **caractérisé par le fait que** la zone d'introduction (18) convergente est munie, dans sa région en contact avec l'élément de retenue (2), de deux bras de maintien (19) notamment réalisés à la manière de fentes, situés à distance l'un de l'autre, se faisant mutuellement face et entourant, marginalement, la région dudit élément de retenue (2) qui forme l'évidement (4).

18. Système selon l'une des revendications précédentes, **caractérisé par le fait que** la zone d'introduction (18) convergente est pourvue, de préférence à sa face extérieure, d'au moins un dispositif de maintien (20) dévolu à un élément additionnel tel qu'un raccord de mesure, par exemple.
